(19) Europäisches Patentamt
European Patent Office
Office européen des brevets

(11) **EP 3 671 489 A1**

(12) **EUROPÄISCHE PATENTANMELDUNG**

(43) Veröffentlichungstag:
**24.06.2020 Patentblatt 2020/26**

(51) Int Cl.:
***G06F 17/50*** (2006.01)  ***B22F 3/105*** (2006.01)

(21) Anmeldenummer: **18214346.1**

(22) Anmeldetag: **20.12.2018**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Siemens Aktiengesellschaft 80333 München (DE)**

(72) Erfinder:
• **Eissing, Katharina 10629 Berlin (DE)**
• **Heinrichsdorff, Frank 14513 Teltow (DE)**
• **Kastsian, Darya 14612 Falkensee (DE)**
• **Reznik, Daniel 13503 Berlin (DE)**

(54) **VERFAHREN ZUM BESTIMMEN VON BAUVORSCHRIFTEN FÜR EIN ADDITIVES FERTIGUNGSVERFAHREN, VERFAHREN ZUM ERSTELLEN EINER DATENBANK MIT KORREKTURMASSNAHMEN FÜR DIE PROZESSFÜHRUNG EINES ADDITIVEN FERTIGUNGSVERFAHRENS UND COMPUTER-PROGRAMMPRODUKT**

(57) Die Erfindung betrifft ein Verfahren zum Bestimmen von Korrekturmaßnahmen für die Durchführung von additiven Fertigungsverfahren. Hierbei ist erfindungsgemäß vorgesehen, dass repräsentative Volumenelemente untersucht werden, um für eine Belichtungssequenz den Temperaturverlauf zu ermitteln. Dieser Temperaturverlauf wird anhand einer FEM-Analyse berechnet, wobei anschließend eine analytische Temperaturfunktion durch eine Fit-Prozedur ermittelt wird, die das FEM-Ergebnis gut nähert. Dies vermindert vorteilhaft den Rechenaufwand bei nachfolgenden Fertigungsplanungen für additiv herzustellenden Bauteile, da in Abhängigkeit von der lokalen Geometrie der herzustellenden Bauteile der Temperaturverlauf mit der vorbereiteten Temperaturfunktion ermittelt werden kann. Die Kenntnis der Temperaturfunktion ermöglicht es daher, Überhitzungen im herzustellenden Bauteil vorherzusehen und in der Fertigungsplanung durch angebrachte Korrekturmaßnahmen zu reagieren.

FIG 1

EP 3 671 489 A1

**Beschreibung**

Die Erfindung betrifft ein Verfahren zum Bestimmen eines Temperaturverlaufes, der die lokale Temperaturentwicklung und die globale Temperaturentwicklung in einem additiv herzustellenden Bauteil beschreibt.

Verfahren zum Bestimmen von eine Prozessführung beschreibenden Bauvorschriften zur additiven Herstellung einer Baustruktur auf der Grundlage einer Simulation der Herstellung der Baustruktur sind bekannt. Dabei werden für die Simulation folgende Schritte durchlaufen. Ein Fertigungsdatensatz für die Baustruktur, der die Baustruktur in herzustellenden Lagen beschreibt, wird zur Verfügung gestellt. Eine globale Temperaturentwicklung in den bereits hergestellten Lagen der Baustruktur unter Berücksichtigung einer Bauhistorie der Baustruktur und des Wärmeeintrags durch einen Energiestrahl wird berechnet. Die lokale Temperaturentwicklung in der Umgebung des Wärmeeintrags durch den Energiestrahl wird bestimmt. Die Prozessführung wird unter Berücksichtigung der globalen Temperaturentwicklung und der lokalen Temperaturentwicklung bestimmt. Ein solches Verfahren ist beispielsweise in der WO 2017/174160 A1 beschrieben.

Als Bauvorschriften sollen Daten verstanden werden, welche einer Maschine zum additiven Herstellen der Baustruktur zur Verfügung gestellt werden. Hierzu gehören die Prozessparameter für den Energiestrahl (beispielsweise einen Laserstrahl) sowie die Definition eines Werkzeugpfads. Als Werkzeug im fertigungstechnischen Sinne kommt der Energiestrahl zum Einsatz, so dass der Werkzeugpfad dem Bestrahlungspfad des Energiestrahls entspricht. Der Werkzeugpfad besteht üblicherweise aus einer Vielzahl von aneinander gereihten Vektoren, die durch den Energiestrahl abgefahren werden. Die Bauschriften definieren damit eine Prozessführung, die durch die Maschine zum additiven Herstellen abgearbeitet wird.

Weiterhin betrifft die Erfindung ein Verfahren zum Bestimmen von Korrekturmaßnahmen der Prozessführung eines Verfahrens zur additiven Herstellung von Baustrukturen auf der Grundlage einer Simulation. Dabei wird ein Fertigungsdatensatz für die Baustruktur zur Verfügung gestellt. Dieser Fertigungsdatensatz beschreibt die Baustruktur in herzustellenden Lagen, da die Baustruktur in aufeinanderfolgenden Lagen hergestellt werden soll. Die Baustruktur kann aus einem herzustellenden Bauteil bestehen. Zu der Baustruktur gehören aber häufig auch Stützstrukturen, welche fertigungsbedingt zusammen mit dem Bauteil hergestellt werden und nach der Herstellung der Baustruktur von dem Bauteil entfernt werden. Bei der Simulation wird weiterhin eine globale Temperaturentwicklung in dem in Herstellung befindlichen Bauteil in Form einer Referenztemperatur $T_0$ berücksichtigt. Außerdem wird die lokale Temperaturentwicklung in der Umgebung des Wärmeeintrags durch einen Energiestrahl, beispielsweise einen Laserstrahl, berechnet. Wie bereits erwähnt, fährt der Energiestrahl einen bestimmten Werkzeugpfad ab, der durch die Prozessführung ebenso die durch die bereits erwähnten Prozessparameter vorgegeben wird.

Zuletzt betrifft die Erfindung Computer-Programmprodukte mit Programmbefehlen zur Durchführung der oben genannten Verfahren sowie eine Bereitstellungsvorrichtung für die besagten Computer-Programmprodukte.

Als additive Fertigungsverfahren im Sinne dieser Anmeldung sollen Verfahren verstanden werden, bei denen das Material, aus dem ein Bauteil hergestellt werden soll, dem Bauteil während der Entstehung hinzugefügt wird. Dabei entsteht das Bauteil bereits in seiner endgültigen Gestalt oder zumindest annähernd in dieser Gestalt.

Um das Bauteil herstellen zu können, werden das Bauteil beschreibende Daten (CAD-Modell) für das gewählte additive Fertigungsverfahren aufbereitet. Die Daten werden zur Erstellung von Anweisungen für die Fertigungsanlage in an das Fertigungsverfahren angepasste Daten eines herzustellenden Werkstücks umgewandelt, damit in der Fertigungsanlage die geeigneten Prozessschritte zur sukzessiven Herstellung dieses Werkstücks ablaufen können. Die Daten werden dafür so aufbereitet, dass die geometrischen Daten für die jeweils herzustellenden Lagen (Slices) des Werkstücks zur Verfügung stehen, was auch als Slicen bezeichnet wird. Das Werkstück kann eine vom Bauteil abweichende Gestalt haben. Beispielsweise kann ein herstellungsbedingter Bauteilverzug berücksichtigt werden, der durch eine abweichende Werkstückgeometrie kompensiert wird. Auch weist das Werkstück gewöhnlich Stützstrukturen auf, die bei einer Nachbearbeitung des Bauteils wieder entfernt werden müssen.

Ausgangspunkt für die Durchführung eines additiven Fertigungsverfahrens ist eine Beschreibung des Werkstücks in einem Geometriedatensatz, beispielsweise als STL-File (STL steht für Standard Tessellation Language). Das STL-File enthält die dreidimensionalen Daten für eine Aufbereitung zwecks Herstellung durch das additive Fertigungsverfahren. Aus dem STL-File wird ein Fertigungsdatensatz, beispielsweise ein CLI-File (CLI steht für Common Layer Interface) erzeugt, welcher eine zum additiven Herstellen geeignete Aufbereitung der Geometrie des Werkstücks in Lagen oder Scheiben (sog. Slices) enthält. Diese Transformation der Daten wird als Slicen bezeichnet. Außerdem benötigt die Maschine weitere Vorgaben zum Herstellen, z.B. die Höhe der herzustellenden Lagen, die Ausrichtung der Schreibvektoren, also Richtung und Länge des Weges, welchen der Energiestrahl auf der Oberfläche des Pulverbettes beschreibt, und die Aufteilung der zu erzeugenden Werkstücklage in Sektoren, in denen bestimmte Verfahrensparameter gelten. Des Weiteren sind Fokusdurchmesser und Leistung des verwendeten Energiestrahls festzulegen. Das CLI-File und die Herstellungsdaten bestimmen zusammen einen Ablaufplan, nach dem das im STL-File beschriebene Werkstück in der Fertigungsanlage Lage für Lage additiv hergestellt werden kann.

Wie obenstehend erläutert, werden additive Fertigungsverfahren computergestützt durchgeführt, um ausgehend von einem das herzustellende Bauteil beschreibenden Datensatz das reale Bauteil herstellen zu können. Sofern es in der nachfolgenden Beschreibung nicht anders angegeben ist, beziehen sich die Begriffe "erstellen", "berechnen", "rechnen", "feststellen", "generieren", "konfigurieren", "modifizieren" und dergleichen, vorzugsweise auf Handlungen und/oder Prozesse und/oder Verarbeitungsschritte, die Daten verändern und/oder erzeugen und/oder die Daten in andere Daten überführen, wobei die Daten insbesondere als physikalische Größen dargestellt werden oder vorliegen können, beispielsweise als elektrische Impulse. Insbesondere ist der Ausdruck "Computer" breit auszulegen, um alle elektronischen Geräte mit Datenverarbeitungseigenschaften abzudecken. Computer können somit beispielsweise Personal Computer, Server, Handheld-Computer-Systeme, Pocket-PC-Geräte, Mobilfunkgeräte und andere Kommunikationsgeräte, die rechnergestützt Daten verarbeiten können, Prozessoren und andere elektronische Geräte zur Datenverarbeitung sein, die vorzugsweise auch zu einem Netzwerk zusammengeschlossen sein können.

Unter "rechnergestützt" kann im Zusammenhang mit der Erfindung beispielsweise eine Implementierung des Verfahrens verstanden werden, bei dem ein Computer oder mehrere Computer mindestens einen Verfahrensschritt des Verfahrens ausführt oder ausführen.

Unter einem "Prozessor" kann im Zusammenhang mit der Erfindung beispielsweise eine Maschine oder eine elektronische Schaltung verstanden werden. Bei einem Prozessor kann es sich insbesondere um einen Hauptprozessor (engl. Central Processing Unit, CPU), einen Mikroprozessor oder einen Mikrokontroller, beispielsweise eine anwendungsspezifische integrierte Schaltung oder einen digitalen Signalprozessor, möglicherweise in Kombination mit einer Speichereinheit zum Speichern von Programmbefehlen, etc. handeln. Bei einem Prozessor kann es sich beispielsweise auch um einen IC (integrierter Schaltkreis, engl. Integrated Circuit), insbesondere einen FPGA (engl. Field Programmable Gate Array) oder einen ASIC (anwendungsspezifische integrierte Schaltung, engl. Application-Specific Integrated Circuit), oder einen DSP (Digitaler Signalprozessor, engl. Digital Signal Processor) handeln. Auch kann unter einem Prozessor ein virtualisierter Prozessor oder eine Soft-CPU verstanden werden. Es kann sich beispielsweise auch um einen programmierbaren Prozessor handeln, der mit einer Konfiguration zur Ausführung des genannten erfindungsgemäßen Verfahrens ausgerüstet ist.

Unter einer "Speichereinheit" kann im Zusammenhang mit der Erfindung beispielsweise ein computerlesbarer Speicher in Form eines Arbeitsspeichers (engl. Random-Access Memory, RAM) oder einer Festplatte verstanden werden.

Als Beispiele für das additive Fertigen können das selektive Lasersintern (auch SLS für Selective Laser Sintering), das Selektive Laserschmelzen (auch SLM für Selective Laser Melting) und das Elektronenstrahlschmelzen (auch EBM für Electron Beam Melting) genannt werden. Diese Verfahren eignen sich insbesondere zur Verarbeitung von metallischen Werkstoffen in Form von Pulvern, mit denen Konstruktionsbauteile hergestellt werden können.

Beim SLM, SLS und EBM werden die Bauteile lagenweise in einem Pulverbett hergestellt. Diese Verfahren werden daher auch als pulverbettbasierte additive Fertigungsverfahren bezeichnet. Es wird jeweils eine Lage des Pulvers in dem Pulverbett erzeugt, die durch die Energiequelle (Laser oder Elektronenstrahl) anschließend in denjenigen Bereichen lokal aufgeschmolzen oder gesintert wird, in denen das Bauteil entstehen soll. So wird das Bauteil sukzessive lagenweise erzeugt und kann nach Fertigstellung dem Pulverbett entnommen werden.

Verfahren der eingangs angegebenen Art sind beispielsweise in der WO 2017/174160 A1 beschrieben. Gemäß diesem Dokument werden herstellungsbedingte Formabweichungen und Spannungen in einer mit einem additiven Herstellungsverfahren hergestellten Baustruktur dadurch ermittelt, dass eine Simulation durchgeführt wird. Dabei werden sogenannte Superlagen erzeugt, die mehrere herzustellende Lagen aufweisen und dadurch den Rechenaufwand bei der Simulation verringern. Um dabei trotzdem ein Simulationsergebnis mit genügender Genauigkeit zu erhalten, werden Schrumpfungsfaktoren für das verfestigte Material ermittelt, um in der jeweiligen Superlage eine effektive Schrumpfung zu berechnen.

Die Schrumpfung wird maßgeblich durch die während der Herstellung der Baustruktur herrschenden Temperaturen beeinflusst. Daher wird bei dem Verfahren gemäß der WO 2017/174160 A1 sowohl das thermische Verhalten der bisher hergestellten Baustruktur global berechnet sowie auch das direkte Abkühlungsverhalten des Schmelzbads in der gerade hergestellten Lage lokal. Mit dem Verfahren lässt sich der Aufwand bei der Simulation zwar verringern, allerdings ist die Simulation im Vorfeld einer Herstellung der Baustruktur nach wie vor mit einem bedeutenden Rechenaufwand verbunden. Das Endergebnis der Simulation ist eine Baustruktur, bei der die Schrumpfung und die Ausbildung von Gefügespannungen bei der Formgebung berücksichtigt sind, indem eine mittels des Simulationsverfahrens modifizierte Geometrie der Baustruktur hergestellt wird, die aufgrund der Spannungen und Schrumpfungen die gewünschte Geometrie der Baustruktur annimmt.

Ein weiteres Problem in der Fertigung von Bauteilen durch die SLM-Technik sowie verwandte Techniken stellt die lokale Überhitzung dar. Normalerweise werden Prozessparameter (wie z.B. die Laserleistung und die Vorschubgeschwindigkeit) in der Phase des Einfahrens des Prozesses für Standardkörper (z.B. massive Würfel) festgelegt. Ein reales Werkstück beinhaltet aber oft dünnwandige oder überhängende Strukturen. In diesen Bereichen stellt der Körper lokal eine wesentlich kleinere thermische Kapazität zur Verfügung, so dass die Struktur unter der Verwendung von Standard-Prozessparametern lokal überhitzen kann. Dieses führt zum Beispiel zu unerwünscht großen Schmelzbädern, die durch die Bildung großer Schmelzperlen im weiteren Aufbau das Rakeln der Pulverschicht empfindlich stören und auch einen Prozessabbruch verursachen können, wenn eine Kollision zwischen einer erstarrten Schmelzperle und dem Beschichter entweder das Werkstück oder den Beschichter beschädigen.

Die Aufgabe der Erfindung besteht darin, die eingangs angegebenen Verfahren derart weiterzubilden, dass eine möglichst genaue Simulation eines additiven Herstellungsverfahrens mit vergleichsweise geringem Rechenaufwand ermöglicht wird. Außerdem ist es Aufgabe der Erfindung, ein Verfahren zum Bestimmen von Korrekturmaßnahmen einer Prozessführung zum Herstellen von Baustrukturen anzugeben, bei der die Korrekturmaßnahmen auf der Grundlage einer Simulation ermittelt werden. Zuletzt ist es Aufgabe der Erfindung, Computer-Programmprodukte sowie eine Bereitstellungsvorrichtung für derartige Computer-Programmprodukte anzugeben, mit denen sich die oben genannten Verfahren durchführen lassen.

Diese Aufgabe wird mit dem eingangs angegebenen Anspruchsgegenstand (Verfahren) erfindungsgemäß dadurch gelöst, dass

- die Geometrie und Materialeigenschaften (z. B. Wärmekapazität, Wärmeleitfähigkeit, Schmelztemperatur, Reflektionskoeffizient des verwendeten Pulvers) von mindesten einem RVE definiert werden,
- eine Belichtungssequenz auf dem RVE, bestehend aus den verwendeten Belichtungsvektoren, die in den Belichtungsvektoren verwendete Leistung, sowie die zeitliche Abfolge der Belichtung der einzelnen Belichtungsvektoren festgelegt wird,
- eine globale Temperaturentwicklung in Form mindestens einer Referenztemperatur $T_0$ vorgegeben wird,
- die lokale Temperaturentwicklung in der Umgebung des Wärmeeintrags durch einen Energiestrahl (17) auf der Grundlage einer FEM-Simulation berechnet wird,
- eine Ansatzfunktion bereitgestellt wird, die unter Berücksichtigung der Referenztemperatur $T_0$ den Verlauf der lokalen Temperaturentwicklung als Summe von Basisfunktionen beschreibt, wobei die Basisfunktionen abklingende Impulsantworten auf einen durch den Energiestrahl erzeugten Wärmeimpuls darstellt,
- die Abtastpunkte auf der Belichtungssequenz für eine Fit-Prozedur festgelegt werden,
- Koeffizienten bestimmt werden, mit denen die Ansatzfunktion an die durch die FEM-Methode ermittelte Temperaturentwicklung angepasst, insbesondere gefittet wird, wobei durch Einsetzen der Koeffizienten in der Ansatzfunktion eine Temperaturfunktion erstellbar ist,
- die Koeffizienten und/oder die Temperaturfunktion für die geltenden Prozessparameter in einer Datenbank (RULE) abgelegt werden.

Als Prozessparameter sind alle den Prozess beeinflussenden Größen zu verstehen. Das erfindungsgemäße Verfahren wird hier für ein bestimmtes Material, welches zur Verarbeitung durch additives Fertigen vorgesehen ist, durchgeführt. Die verwendeten Prozessparameter, die von der verwendeten Anlage abhängen, werden in einem vorherigen Schritt bestimmt und als Eingangsgrößen für das erfindungsgemäße Verfahren verwendet.

Als Belichtungssequenz versteht man die Folge von Vektoren, die bei der Berechnung der RVE auf der Oberfläche des Pulverbettes durch den Energiestrahl wie zum Beispiel den Laser abgefahren werden.

In dieser Anmeldung bezeichnet das Wort "Belichtungssequenz" die Abfolge der zu betrachtenden Belichtungsvektoren auf dem RVE, während der Begriff "Werkzeugpfad" die komplette Bauvorschrift für ein herzustellendes Bauteil, bezeichnet, also, wie in der Industrie üblich, als die komplette Beschreibung der Bauvorschrift inklusive der verwendeten Prozessparameter eines Werkstücks verstanden wird (hierzu im Folgenden noch mehr).

Als Fitprozess (fitten) im Sinne der Anmeldung soll ein Verfahren verstanden werden, bei dem für einen Satz von Abtastpunkten auf der Belichtungssequenz eine Ansatzfunktion in der Zeit mit einer endlichen Anzahl Koeffizienten untersucht wird. Hierbei gilt es, die Koeffizienten in der Ansatzfunktion so zu bestimmen, dass die Ansatzfunktion an eine bestimmte Menge von zeitlichen und räumlichen Abtastpunkten am besten angepasst ist. Dabei kann "am besten" unterschiedlich definiert werden. Im vorliegenden Fall wird die Menge von Abtastpunkten aus der FEM Simulation einer RVE bestimmt.

Gemäß einer Ausgestaltung der Erfindung ist vorgesehen, dass die lokale Temperaturentwicklung durch mindestens drei Summanden beschrieben wird, wobei

- ein Summand die Temperaturentwicklung des gerade belichteten Belichtungsvektor beschreibt,
- mindestens ein Summand die Temperaturentwicklung mindestens eines der vorher belichteten Belichtungsvektoren beschreibt,
- mindestens ein Summand die Temperaturentwicklung mindestens eines der nachher zu belichteten Belichtungsvektoren beschreibt.

Gemäß einer Ausgestaltung der Erfindung ist vorgesehen, dass die lokale Temperaturentwicklung durch nicht mehr als 101 Summanden beschrieben wird, wobei

- ein Summand die Temperaturentwicklung des gerade belichteten Belichtungsvektors beschreibt,
- nicht mehr als 50 Summanden die Temperaturentwicklung der 50 vorher belichteten Belichtungsvektoren beschreibt,
- nicht mehr als 50 Summanden die Temperaturentwicklung der 50 anschließend zu belichteten Belichtungsvektoren beschreibt.

Gemäß einer besonders vorteilhaften Ausgestaltung der Erfindung ist vorgesehen, dass die lokale Temperaturentwicklung durch nicht mehr als elf Summanden beschrieben wird, wobei

- ein Summand die Temperaturentwicklung des gerade belichteten Belichtungsvektors beschreibt,
- fünf Summanden die Temperaturentwicklung der fünf vorher belichteten Belichtungsvektoren beschreibt,
- fünf Summanden die Temperaturentwicklung der fünf anschließend zu belichteten Belichtungsvektoren beschreibt.

Gemäß dieser Ausführung der Erfindung kann nämlich eine ausreichende Annäherung der Temperaturfunktion durch die Beiträge höchstens 101, vorzugsweise höchstens 11 Summanden dargestellt werden: beispielsweise drei Vektoren, die unmittelbar vor der Belichtung des jeweiligen Vektors belichtet wurden, dem belichteten Vektor selbst, sowie den nachfolgenden 3 Vektoren (dies bedeutet, dass m gemäß Gleichung(2) von -3 bis +3 läuft, wobei bei dem gerade belichteten Vektor m = 0 ist). Abhängig von Material- und Prozessparametern ist auch eine höhere oder niedrigere Anzahl denkbar. Die vorteilhafte Wahl hängt in erster Linie vom zu simulierenden Material ab. Es hat sich allerdings gezeigt, dass sie üblicherweise nicht oberhalb von 11 zu liegen braucht damit in allen Fällen eine vorteilhaft hinreichende Genauigkeit der Approximation der Ansatzfunktion an die Realität erfolgen kann.

Gemäß einer Ausgestaltung der Erfindung ist vorgesehen, dass die Referenztemperatur ($T_0$) in der Ansatzfunktion durch einen Summanden beschrieben wird. Hierbei hat es sich vorteilhafter Weise gezeigt, dass die Referenztemperatur im Wesentlichen additiv in die Ansatzfunktion eingeht. Diese hat auch eine Zeitabhängigkeit, jedoch auf einer deutlich größeren zeitlichen Skala. Die Referenztemperatur hängt von den verwendeten Prozessparametern des additiven Fertigungsverfahrens sowie der genauen Geometrie des Bauteils ab und hat innerhalb des erfindungsgemäßen Verfahrens auch einen Einfluss auf die Koeffizienten.

Gemäß einer Ausgestaltung der Erfindung ist vorgesehen, dass zusätzlich ein Summand berücksichtigt wird, der ein Plateau im Temperaturverlauf des Schmelzbades auf Grund des Durchlaufens des Solidus-Liquidus-Temperaturbereiches beschreibt.

Gemäß einer Ausgestaltung der Erfindung ist vorgesehen, dass der Summand das Produkt einer exponentiell abfallenden Exponentialfunktion (K) und einer Anstiegsfunktion (H) enthält.

Das Problem wird erfindungsgemäß dadurch gelöst, indem für die komplexe, orts- und zeitabhängige Temperaturfunktion eine semi-analytische Approximation als sog. Ansatzfunktion folgendermaßen eingeführt wird:

Zentrale Idee der lokalen Ansatzfunktion ist die Vorstellung, dass die Temperatur am Abtastpunkt die Summe aus den Beiträgen der Belichtung des aktuellen Abtastpunktes sowie endlich vielen Beiträgen aus vorherigen und nachfolgend belichteten Vektoren ist. Dies kann durch den Ansatz

$$T(x,y,z,t) = T_0(t) + \sum_m \theta_m(t - t_0^m(x,y)) \qquad (2a)$$

dargestellt werden. Der Ansatz (2a) beschreibt die allgemeine Temperaturfunktion als zusammengesetzt aus dem langsamen Anteil $T_0$ und einer Summe von Beiträgen $\theta_m$, die die Form von Impulsfunktionen mit jeweils unterschiedlicher Anstiegs- und Abfallzeit haben und jeweils die Beiträge von vorherigen, aktuellen und nachfolgenden Vektoren darstellen. Unter bestimmten Randbedingungen (Linearität, punktförmige Wärmequelle, halbunendlicher Raum) entsprechen die Funktionen $\theta_m$ der Fundamentallösung der Wärmegleichung (1).

In diesem Fall stellt die Formel (2a) eine allgemeine Lösung der Wärmeleitungsgleichung dar, sofern über unendlich viele Summanden summiert wird.

Für die numerische Durchführung einer Fit-Prozedur ist es vorteilhaft, die Funktionen $\theta_m$ als ein Produkt von jeweils einer ansteigenden Stufenfunktion und einer exponentiell abfallenden Funktion $F_m$, bzw. für m = 0 (Beitrag des eigentlichen Belichtungsvektors) einen zusätzlichen Beitrag $H_0 * K$ einzuführen, so dass sich die besonders bevorzugte Ansatzform sich dann schreiben lässt als

$$T(x,y,z,t) = T_0(t) + \sum_m H_m\big(t - t_0^m(x,y)\big) F_m\big(t - t_0^m(x,y)\big)$$
$$+ H\big(t - (t_0(x,y) + \Delta t_2)\big) K\big(t - t_0(x,y)\big)$$

$$(2b)$$

mit

m Zählvariable für betrachtete Vektoren (beispielsweise von -3
bis +3), wobei bei dem gerade betrachteten Vektor m = 0 ist
x,y,z geometrischen Koordinaten
t Zeit
H Elementarfunktion in Form einer Stufenfunktion mit endlicher Anstiegszeit, (hierzu im Folgenden noch mehr)
F Elementarfunktion in Form einer Abklingfunktion, z. B. Exponentialfunktion (hierzu im Folgenden noch mehr)
K Elementarfunktion in Form einer Plateaufunktion (hierzu im Folgenden noch mehr)
$T_0$ Elementarfunktion für die Referenztemperatur, (hierzu im Folgenden noch mehr)
$t_0^m(x,y)$ Zeitpunkt des Maximalbeitrags des m-ten Pulses auf den Abtastpunkt
$\Delta t_2$ zeitlicher Versatz des Plateaus zum Zeitpunkt der Belichtung des Abtastpunkts (zentraler Puls)

ausgedrückt werden. Dabei bezeichnet $T_0$ die homogenisierte Makroskalen-Temperatur, die wie in WO 2017/174160 A1 ausführlich erläutert berechnet werden kann, während der zweite und dritte Term den schnell variierenden Anteil der Ansatzfunktionen darstellt, und entsprechend die Summe der Beiträge einer kleinen Zahl von Belichtungsvektoren ist. Als Makroskala im Sinne der Erfindung wird der Größenbereich der Abmessungen des hergestellten Bauteils verstanden.

Auf Grundlage von thermischen, mesoskaligen FEM Berechnungen (beispielsweise gemäß der oben genannten WO 2017/174160 A1) der transienten Temperatur in beliebig vielen Abtastpunkten der Belichtungsvektoren in repräsentativen Volumenelementen (RVEs) werden die Koeffizienten der Ansatzfunktionen extrahiert und in einer Datenbank für die Temperaturfunktion hinterlegt. Als Mesoskala im Sinne dieser Erfindung wird ein Größenbereich verstanden, in dem sich die Temperaturverteilung im Schmelzbad, also in der Umgebung des Wärmeeintrags darstellen lässt. Die Koeffizientendatenbank erlaubt die Berechnung der Temperaturtransiente in jedem beliebigen Abtastpunkt auf den Belichtungsvektoren über die Ansatzfunktion. Die Koeffizienten sind abhängig von den Material- und Prozessparametern, der genauen Belichtungsreihenfolge, sowie den Koordinaten des Abtastpunktes und den ihm umgebenden Anteil an konsolidierter Masse.

Thermische, mesoskalige Simulationen werden in so vielen, unterschiedlichen RVEs berechnet, dass alle möglichen funktionalen Abhängigkeiten erkannt werden können. Dies ist wichtig, um in der Temperaturberechnung jedes beliebige Bauteil durch die finale Datenbank beschreiben zu können. Die Abhängigkeiten beinhalten insbesondere unterschiedliche Massenanteile, Vektorlängen und homogenisierte Makrotemperaturen $T_0$. Dabei bezeichnet man vorzugsweise den Massenanteil als den Anteil an konsolidiertem Material innerhalb eines repräsentativen Halbellipsoids. Als Vollmaterial gilt, wenn das Halbellipsoid komplett mit Material gefüllt ist.

Die Koeffizienten können rechnerisch ermittelt werden, wenn eine genügend genaue Näherungsformel bekannt ist. Diese Näherungsformel kann beispielsweise für die Amplituden durch Summation der Fundamentallösung der Wärmegleichung für eine punktförmige Wärmequelle erhalten werden. Die fundamentale Lösung der Wärmegleichung für eine punktförmige Wärmequelle in einem halbunendlichen Raum kann wie folgt angegeben werden (beschrieben beispielsweise in H. Carslaw, J. Jaeger, Conduction of heat in solids, Oxford Science Publications, 1959):

$$T(x,y,z,t) = \frac{QA}{4\rho c_p \big(\pi\alpha(t-t_0)\big)^{\frac{3}{2}}} \exp\left(\frac{-R^2}{4\alpha(t-t_0)}\right)$$

$$(1)$$

Mit

$t_0$ Belichtungszeitpunkt der Punktquelle
t $\geq t_0$
Q Energie der Wärmequelle
A Transmissionskoeffizient

ρ     Dichte

$c_p$    spezifische Wärme bei konstantem Druck

α    Temperaturleitfähigkeit

R    Abstand zwischen Quelle und betrachtetem Abtastpunkt

Für die Berechnung der Temperatur eines Werkzeugpfades in einer herzustellenden Baustruktur, der der kompletten Bauvorschrift eines additiv gefertigten Werkstücks entspricht, wird nun ein 3D-Satz von Abtastpunkten erstellt, auf dem die Approximation berechnet wird. Dieser Punkteraum wird dadurch aufgespannt, dass zuerst die Menge aller Belichtungsvektoren (auch Werkzeugpfad genannt), die zur Herstellung des Bauteils mittels des additiven Verfahrens (beispielsweise SLM-Verfahren) benötigt werden, betrachtet wird. Diese Belichtungsvektoren werden typischerweise im Schritt der Arbeitsvorbereitung (CAM) erstellt. Der 3D-Punktesatz wird durch eine Abtastung all dieser Belichtungsvektoren generiert. Eine mögliche Abtastung wäre die Verwendung von zumindest dem Start- und Endpunkt eines jeden Vektors, aber bei Bedarf kann jeder Vektor auch durch 3 oder mehr Abtastpunkte abgetastet werden.

Gemäß einer Ausgestaltung der Erfindung ist vorgesehen, dass der Werkzeugpfad aus einzelnen Belichtungsvektoren besteht, wobei für jeden Belichtungsvektor mindestens ein Abtastpunkt definiert wird.

Um eine genügende Abtastungsdichte zu erreichen ist es besonders vorteilhaft, auf jedem Vektor mehr als zwei Abtastpunkte vorzusehen.

Gemäß einer Ausgestaltung der Erfindung ist vorgesehen, dass die Basisfunktionen den Verlauf der lokalen Temperaturentwicklung durch Multiplikation einer Stufenfunktion mit endlicher Anstiegszeit, kurz Anstiegsfunktion (H), und einer abklingenden Exponentialfunktion (F) beschreibt. Die Überlagerung dieser beiden Funktionen hat sich vorteilhaft als gute Näherung für die real ablaufende Temperaturentwicklung an den RVE herausgestellt. Hierdurch wird vorteilhaft der Aufwand begrenzt, der zur Auffindung der Koeffizienten erforderlich ist.

Die Elementarfunktion H ist eine in der Zeit monoton steigende Funktion zwischen Null und einer Amplitude $A_m$, wobei der Anstieg durch eine charakteristische Zeitkonstante $t^m_{rise}$ bestimmt wird. Die Amplitude der Impulsantwort $A_m$ kann aus Material- und Prozessparametern, der Belichtungsreihenfolge der Belichtungsvektoren, dem genauen Ort auf dem Belichtungsvektor und dem Masseanteil im Abtastpunkt bestimmt werden.

Für die Elementarfunktion H ist die Anstiegszeit endlich, wobei für den Anstieg in dem gerade belichteten Vektor eine Anstiegszeit von $10^{-6}$ s realistisch ist. Für die benachbarten Vektoren (die zeitlich vor bzw. nach dem gerade belichteten Vektor zu belichten sind) sind längere Anstiegszeiten zu berücksichtigen.

Die Zeitkonstante $t^m_{rise}$ kann von Material-, Prozessparametern, dem Masseanteil, dem genauen Ort im aktuellen Schreibvektor und der zeitlichen und räumlichen Differenz zu vorherigen Belichtungsvektoren abhängen. Eine bevorzugte Ausführung der Elementarfunktion H ist in Gleichung (3) dargestellt.

$$H_m(t - t_0^m) = \frac{A_m}{1 + \exp(-2 \cdot (t - t_0^m)/t_{rise}^m)} \qquad (3)$$

Die Elementarfunktion F ist eine nach oben beschränkte und in der Zeit abfallende Exponentialfunktion mit einer beliebigen Basis und einem beliebigen Polynom im Exponenten, wobei der zeitliche Abfall durch eine charakteristische Zeitkonstante $\tau_m$ definiert ist.

Diese Zeitkonstante $\tau_m$ kann von Material-, Prozessparametern, dem Masseanteil, dem genauen Ort im aktuellen Schreibvektor und der zeitlich und räumlichen Differenz zu vorherigen Belichtungsvektoren abhängen. Eine bevorzugte Ausführung der Elementarfunktion H ist in Gleichung (4) dargestellt.

$$F_m(t - t_0^m) = \min(1, \exp(-(t - t_0^m)/\tau_m)) \qquad (4)$$

Die Elementarfunktion K ist das Produkt eines Vorfaktors k, einer Fermifunktion mit inverser Zeitskala β und einer nach oben beschränkten zeitlich abfallenden Exponentialfunktion. Dieser exponentielle Abfall wird durch eine Zeitskala $\tau_{add}$ charakterisiert.

Δt definiert die zeitliche Ausdehnung des Plateaus, also den zeitlichen Versatz zwischen Belichtungszeitpunkt des Abtastpunkt und Beginn des exponentiellen Abfalls. Diese Ausdehnung, genauso wie der Vorfaktor k und die inverse Zeitskala β sind abhängig von der Vorwärme (Die Vorwärme bezeichnet dabei die Temperatur des Abtastpunkts δt vor seiner Belichtung). Diese wiederum ist abhängig vom zu betrachtenden Abtastpunkt, den Material- und Prozessparametern, dem Masseanteil und der Belichtungsstrategie.

$\tau_{add}$ definiert die Zeitskala des exponentiellen Abfalls des Plateaus und ist abhängig von der Breite des Plateaus und der Wiederkehrzeit des Energiestrahls zum räumlich nächsten Abtastpunkt im nachfolgend belichteten Vektor, sowie Material- und Prozessparameter.

Eine bevorzugte Ausführung der Elementarfunktion K ist in Gleichung (5) dargestellt.

$$K(t - t_0^m) = \min\left(k, k * \min\left(1, \exp\left(-\tau_{add}(t - t_0^m - \Delta t)\right)\right) \frac{1}{1 + \exp\left(\beta\left(t - (t_0^m + \Delta t)\right)\right)}\right) \quad (5)$$

Es besteht weiterhin die Aufgabe, aus einem Werkzeugpfad eines Bauteils für jeden Abtastpunkt die zeit- und ortsabhängige Temperatur T zu bestimmen, die von lokaler Überhitzung betroffenen Vektoren zu identifizieren, um für diese geeignete Korrekturen zu formulieren.

Diese Aufgabe wird alternativ mit dem eingangs angegebenen Anspruchsgegenstand (Verfahren zum Vorbereiten von zu fertigenden Baustrukturen) erfindungsgemäß auch dadurch gelöst, dass

- Für das Bauteil die globale Temperaturentwicklung nach WO 2017/174160 A1 berechnet wird
- aus einer Datenbank (RULE) eine Temperatur-Funktion und/oder die Koeffizienten einer Temperaturfunktion abgerufen wird oder werden, mit der die lokale Temperaturentwicklung berechnet wird,
- in Abhängigkeit der globalen Temperaturentwicklung und der lokalen Temperaturentwicklung Korrekturmaßnahmen der Prozessführung bestimmt werden,
- die Korrekturmaßnahmen der Prozessführung lokal einzelnen Vektoren (30) eines Werkzeugpfades (31) des Energiestrahls (17) zugeordnet werden.

Das letztgenannte Verfahren ermöglicht es vorteilhaft, die durch Analyse von repräsentativen Volumenelementen gefundenen Zusammenhänge zeitsparend ohne den Aufwand einer FEM-Simulation in Form der aufgefundenen Koeffizienten zu berücksichtigen. Durch Einsetzen der Koeffizienten in die Ansatzfunktion wird die Temperaturfunktion erhalten, welche in einzelnen Abtastpunkten des Werkzeugpfades berechnet werden kann. Die Dichte der ausgewählten Abtastpunkte auf dem Werkzeugpfad muss so gewählt werden, dass eine hinreichende Ortsauflösung der Temperaturentwicklung der herzustellenden Baustruktur ermöglicht wird.

Zum Zwecke der Berechnung ist es alternativ möglich, entweder die Koeffizienten, die es in die Ansatzfunktion einzusetzen gilt, in der Datenbank abzulegen, oder verschiedene Temperaturfunktionen selbst abzulegen. Letzteres ist mit einem höheren Speicheraufwand verbunden. Der Vorteil einer Speicherung der Koeffizienten ist somit die Einsparung von Speicherkapazität.

Für alle möglichen Kombinationen aus Prozess- und Materialparametern müssen Ansatzfunktionen mit Koeffizienten bzw. Temperaturfunktionen in der Datenbank abgespeichert sein. Im individuellen Anwendungsfall sind die geeigneten Daten aus der Datenbank abzurufen und im Rahmen einer Berechnung der Temperaturentwicklung zu berücksichtigen. Die Berechnungsergebnisse liegen vorteilhaft in einem Bruchteil der für eine Finite Elemente Berechnung erforderlichen Zeit vor, weswegen eine effiziente Fertigungsplanung mithilfe der erfindungsgemäßen Vorgehensweise ermöglicht wird.

Gemäß einer Ausgestaltung der Erfindung ist vorgesehen, dass die Schritte des Abrufens der Temperaturentwicklung und/oder der Koeffizienten, des Bestimmens der Korrekturmaßnahmen und des Zuordnens der Korrekturmaßnahmen wiederholt durchgeführt wird.

Das Durchlaufen der Schritte kann vorteilhaft so lange durchgeführt werden, bis die Temperaturentwicklung einem vorgegebenen Verlauf entspricht oder allgemeiner formuliert ein bestimmtes Kriterium erfüllt. Dieses Kriterium zielt auf die Qualität des Bauteils. Die Temperaturentwicklung ist, wie bereits erläutert, ausschlaggebend dafür, dass es während der Erzeugung der additiv herzustellenden Baustruktur nicht zu einer Überhitzung in Bereichen kommt, wo die Wärmekapazität des umliegenden, bereits hergestellten Bauteils nicht ausreicht, um die Wärme des Energiestrahls zuverlässig abzuführen. In diesen Bereichen ist der Energieeintrag durch den Energiestrahl daher zu reduzieren.

Der Betrag der Reduzierung kann mittels des erfindungsgemäßen Verfahrens ermittelt werden, bevor die erste Baustruktur tatsächlich hergestellt wird. Um den Erfolg dieser Reduktion rechnerisch nachzuweisen, ist es vorteilhaft, das Verfahren in mehreren Iterationsschleifen, also wiederholt anzuwenden. In diesem Fall gilt es, das Kriterium zu erfüllen, dass es nicht zu einer Überhitzung des Bauteils kommt. Die Überhitzung des Bauteils kann durch einen bestimmten Temperaturbereich definiert werden, in dem sich das Bauteil während der Herstellung der aktuellen Schicht befinden muss.

Gemäß einer Ausgestaltung der Erfindung ist vorgesehen, dass die Datenbank (RULE) eine Vielzahl von Temperaturfunktionen und/oder Koeffizienten beinhaltet, die abhängig von Punktkoordinaten und/oder Masseverteilungen und/oder Referenztemperaturen und/oder Vektorlängen im Werkzeugpfad im Bereich des Energieeintrags des Energiestrahls ausgewählt werden.

Folgende Einflussfaktoren können vorteilhaft Berücksichtigung finden, in dem eine geeignete Temperaturfunktion ausgewählt oder durch Einsetzen von Koeffizienten in die Ansatzfunktion gebildet wird. Die Referenztemperatur beeinflusst die Überhitzung des Bauteils dahingehend, dass die Wärmeabfuhr umso langsamer erfolgt, je wärmer die bereits hergestellte Baustruktur ist. Die Vektorlänge beeinflusst die Temperaturentwicklung insofern, dass die wiederholte Erwärmung von benachbarten Abtastpunkten aufgrund der parallelen Lage nacheinander belichteter Belichtungsvektoren zeitlich länger auseinander liegt. Ein wichtiger Einflussfaktor ist außerdem die Masseverteilung um den Abtastpunkt, da diese den Wärmeabfluss und damit die Gefahr einer Überhitzung direkt beeinflusst, wie im Folgenden noch näher erläutert wird.

Gemäß einer Ausgestaltung der Erfindung ist vorgesehen, dass zur Ermittlung der Masseverteilung im Bereich des Energieeintrags des Energiestrahls ein Massenintegral berechnet wird,

- wobei über ein definiertes Integrationsvolumen integriert wird,
- wobei das Integrationsvolumen einen Teil der dem Energiestrahl zugewandten Oberfläche der Baustruktur enthält,
- wobei der Abtastpunkt des betrachteten Vektors im Mittelpunkt des Integrationsvolumens liegt.

Auf diesem Wege lässt sich vorteilhaft ein Massenintegral erstellen, welches, wie oben beschrieben, auch in dem Verfahren zur Ermittlung der Korrekturmaßnahmen Anwendung finden kann. Dies ermöglicht einen Vergleich der für die realen Baustrukturen ermittelten Massenintegrale mit denjenigen, die in der Datenbank abgelegt sind.

Insbesondere kann gemäß einer vorteilhaften Ausgestaltung das Massenintegral die Gestalt eines Ellipsoids oder eines Halbellipsoids mit einer Halbachse $\delta r$ in einer x-y-Ebene der herzustellenden Lage und $\delta z$ in z-Richtung haben. Die Vorteile einer derartigen Gestaltung des Massenintegrals sind oben bereits erläutert worden.

Gemäß einer Ausgestaltung der Erfindung ist vorgesehen, dass die Korrekturmaßnahmen eine Verringerung der Leistung des Energiestrahls und/oder eine Verlängerung der Pausenzeiten zwischen den Bestrahlungszeiten einzelner Vektoren und/oder eine Vergrößerung der Verfahrgeschwindigkeit des Energiestrahls und/oder eine Vergrößerung des Hatch-Abstandes zwischen den Vektoren und/oder eine Veränderung der Vektorreihenfolge und/oder eine Veränderung der Vektorlänge und/oder eine Veränderung der Vektorausrichtung beinhalten. Hierbei handelt es sich vorteilhaft um Maßnahmen, die die eingebrachte Energie pro Flächenanteil der Oberfläche des Pulverbettes verringern. Auf diesem Wege lässt sich daher eine Überhitzung in gefährdeten Gebieten des zu betrachtenden Bauteils verhindern.

Des Weiteren wird ein Computerprogrammprodukt mit Programmbefehlen zur Durchführung des genannten erfindungsgemäßen Verfahrens und/oder dessen Ausführungsbeispielen beansprucht, wobei mittels des Computerprogrammprodukts jeweils das erfindungsgemäße Verfahren und/oder dessen Ausführungsbeispiele durchführbar sind.

Zusätzlich wird eine Variante des Computerprogrammproduktes mit Programmbefehlen zur Konfiguration einer Fertigungsanlage zum additiven Fertigen beansprucht, wobei das Erstellungsgerät mit den Programmbefehlen derart konfiguriert wird, dass das genannte erfindungsgemäße Werkstück erzeugt wird.

Darüber hinaus wird eine Bereitstellungsvorrichtung zum Speichern und/oder Bereitstellen des Computerprogrammprodukts beansprucht. Die Bereitstellungsvorrichtung ist beispielsweise ein Datenträger, der das Computerprogrammprodukt speichert und/oder bereitstellt. Alternativ und/oder zusätzlich ist die Bereitstellungsvorrichtung beispielsweise ein Netzwerkdienst, ein Computersystem, ein Serversystem, insbesondere ein verteiltes Computersystem, ein cloudbasiertes Rechnersystem und/oder virtuelles Rechnersystem, welches das Computerprogrammprodukt vorzugsweise in Form eines Datenstroms speichert und/oder bereitstellt.

Diese Bereitstellung erfolgt beispielsweise als Download in Form eines Programmdatenblocks und/oder Befehlsdatenblocks, vorzugsweise als Datei, insbesondere als Downloaddatei, oder als Datenstrom, insbesondere als Downloaddatenstrom, des vollständigen Computerprogrammprodukts. Diese Bereitstellung kann beispielsweise aber auch als partieller Download erfolgen, der aus mehreren Teilen besteht und insbesondere über ein Peer-to-Peer Netzwerk heruntergeladen oder als Datenstrom bereitgestellt wird. Ein solches Computerprogrammprodukt wird beispielsweise unter Verwendung der Bereitstellungsvorrichtung in Form des Datenträgers in ein System eingelesen und führt die Programmbefehle aus, sodass das erfindungsgemäße Verfahren auf einem Computer zur Ausführung gebracht wird oder das Erstellungsgerät derart konfiguriert, dass dieses das erfindungsgemäße Werkstück erzeugt.

Weitere Einzelheiten der Erfindung werden nachfolgend anhand der Zeichnung beschrieben. Gleiche oder sich entsprechende Zeichnungselemente sind jeweils mit den gleichen Bezugszeichen versehen und werden nur insoweit mehrfach erläutert, wie sich Unterschiede zwischen den einzelnen Figuren ergeben.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

Es zeigen:

Figur 1    eine Anlage zur additiven Fertigung von Bauteilen im Querschnitt mit einer Konfiguration zur rechnergestützten Durchführung von Ausführungsbeispielen der erfindungsgemäßen Verfahren, wobei die Konfiguration als Blockschaltbild verschiedener Programmmodule dargestellt ist,

Figur 2      ein Ausführungsbeispiel des erfindungsgemäßen Verfahrens zum Bestimmen von Temperaturfunktionen als Flussdiagramm,

Figur 3      ein Ausführungsbeispiel des repräsentativen Volumenelements, wie es zur Bestimmung der Temperaturfunktionen nach einem Verfahren gemäß Figur 2 angewendet werden kann,

Figur 4      ein Ausführungsbeispiel des erfindungsgemäßen Verfahrens zum Bestimmen von Bauvorschriften für eine Baustruktur als Flussdiagramm,

Figur 5      ein Ausführungsbeispiel des repräsentativen Volumenelements, wie es zur Bestimmung der Temperaturfunktionen für die Legierung Inconel 718 (IN 718) verwendet werden kann,

Figur 6      das Ergebnis (FEM Data) der FEM Analyse sowie das Ergebnis der erfindungsgemäßen Berechnung (semi analytical fit) des Arbeitspunktes AP3 gemäß Figur 5 sowie im Vergleich des Arbeitspunktes AP2 in einer grafischen Darstellung: Temperatur in Abhängigkeit von der Zeit.

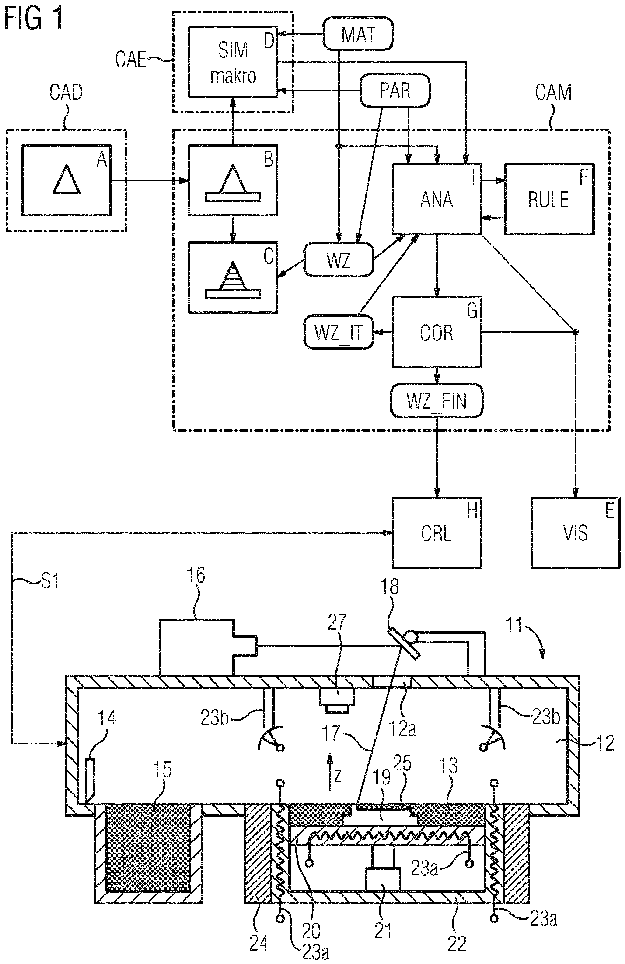

In Figur 1 ist eine Anlage 11 zum Laserschmelzen schematisch dargestellt. Diese weist eine Prozesskammer 12 mit einem Fenster 12a auf, in der ein Pulverbett 13 hergestellt werden kann. Zur Herstellung jeweils einer Lage des Pulverbettes 13 wird eine Verteilungseinrichtung in Form einer Rakel 14 über einen Pulvervorrat 15 und anschließend über das Pulverbett 13 bewegt, wodurch eine dünne Schicht an Pulver im Pulverbett 13 entsteht, die eine oberste Lage 25 des Pulverbettes bildet. Ein Laser 16 erzeugt dann einen Laserstrahl 17, der mittels einer optischen Umlenkvorrichtung mit Spiegel 18 durch das Fenster 12a in die Prozesskammer 12 gelangt und über die Oberfläche des Pulverbettes 13 bewegt wird. Dabei wird das Pulver am Auftreffpunkt des Energiestrahls 17 aufgeschmolzen, wodurch ein Werkstück oder eine Baustruktur 19 entsteht.

Das Pulverbett 13 entsteht auf einer Bauplattform 20, welche über einen Aktor 21 in einem topfförmigen Gehäuse 22 schrittweise um jeweils eine Pulverlagendicke abgesenkt werden kann. In dem Gehäuse 22 sowie der Bauplattform 20 sind Heizeinrichtungen 23a in Form von elektrischen Widerstandsheizungen (alternativ sind auch Induktionsspulen möglich, nicht dargestellt) vorgesehen, welche das in Entstehung befindliche Werkstück 19 sowie die Partikel des Pulverbettes 13 vorwärmen können. Alternativ oder zusätzlich können auch Infrarotstrahler als Heizeinrichtungen 23b in der Prozesskammer 12 angeordnet werden, um die Oberfläche des Pulverbetts 13 zu bestrahlen und dadurch zu erwärmen. Um den Energiebedarf zur Vorwärmung zu begrenzen, befindet sich an dem Gehäuse 22 außen eine Isolation 24 mit geringer thermischer Leitfähigkeit. Die Temperatur an der Oberfläche des Pulvers 13 kann durch eine Wärmebildkamera 27 ermittelt werden, um im Bedarfsfall die Heizleistung der Heizeinrichtungen 23a, 23b anzupassen. Alternativ zu der Wärmebildkamera 27 können auch Temperatursensoren am Pulverbett verwendet werden (nicht dargestellt).

Die Anlage 11 zum Laserschmelzen wird über eine erste Schnittstelle S1 durch eine Steuereinrichtung CRL kontrolliert, welche vorher mit geeigneten Prozessdaten versorgt werden muss.

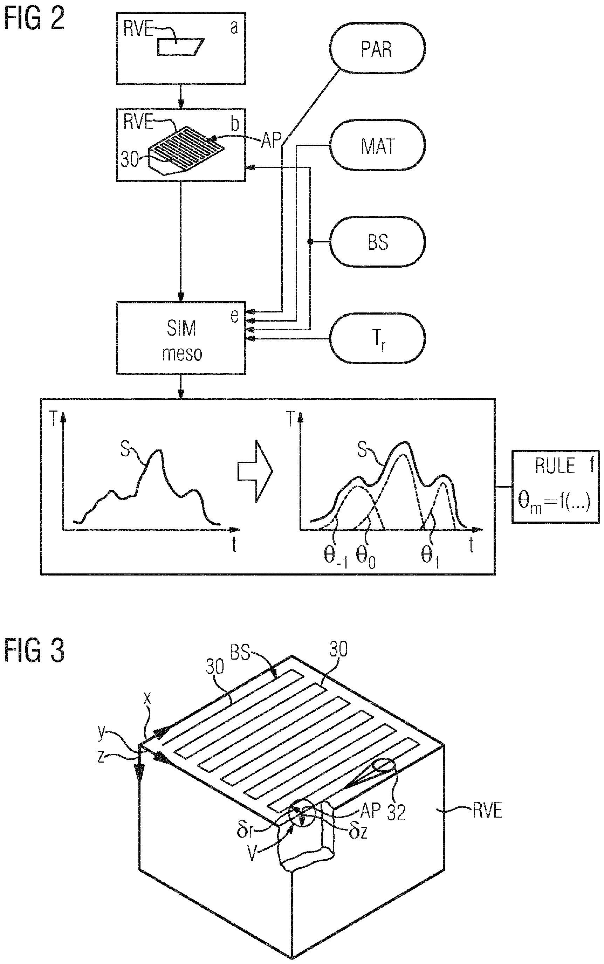

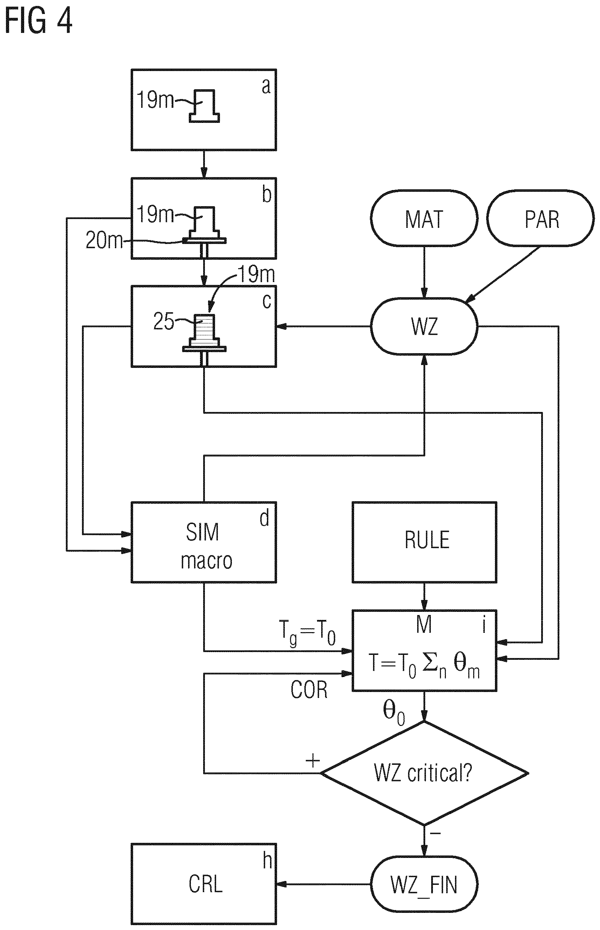

Um die Prozessdaten zu generieren, ist ein Prozessor oder eine Vielzahl von Prozessoren vorgesehen, mit denen ein Programmmodul CAD zur Durchführung eines Computer Aided Designs, ein Programmmodul CAE zum Simulieren eines mit der Fertigungsanlage durchführbaren Fertigungsverfahrens sowie ein Programmmodul CAM zur Vorbereitung des Herstellungsverfahrens des Bauteils 19 durch Generierung der Prozessdaten WZ_FIN vorgesehen ist. Die Hardware Infrastruktur mit den Programmen CAD, CAE und CAM ist dazu geeignet, ein Ausführungsbeispiel des erfindungsgemäßen Verfahrens zum Bestimmen von Temperaturfunktionen gemäß Figur 2 und auch ein Ausführungsbeispiel des erfindungsgemäßen Verfahrens zum Bestimmen der Prozessführung zur Herstellung eines Bauteils 19 gemäß Figur 4 durchzuführen und mit einer Ausgabeeinrichtung VIS auch zu visualisieren. Bei der Erklärung des Verfahrensablaufs gemäß Figur 2 und Figur 4 wird gleichzeitig auf den Aufbau gemäß Figur 1 Bezug genommen. Die einzelnen Programmmodule in Figur 1 sind mit Großbuchstaben A bis I gekennzeichnet. Die Verfahrensschritte gemäß Figur 2 und Figur 4 sind mit kleinen Buchstaben a bis m gekennzeichnet. Soweit die Verfahrensschritte gemäß Figur 2 und Figur 4 in den Programmmodulen in Figur 1 ablaufen, stimmt der gewählte Kleinbuchstabe gemäß Figur 2 und Figur 4 jeweils mit dem gewählten Großbuchstaben gemäß Figur 1 überein.

Das Verfahren zur Bestimmung von Korrekturmaßnahmen (Figur 1 in Verbindung mit Figur 4) beginnt mit einer Bereitstellung von 3-D-Konstruktionsdaten durch das Programm CAD im Programmmodul A.

Das Bauteil 19m ist ein Modell des herzustellenden Bauteils 19 gemäß Figur 1, wobei dieses Modell im Verfahrensschritt a durch das Programmmodul A erstellt werden kann.

In dem Programm CAM erfolgt in einem Programmmodul B der Verfahrensschritt b, demgemäß für das Bauteil eine Oberfläche definiert wird.

In einem nächsten Verfahrensschritt c wird im Programmmodul C die Operation des sogenannten Slicens und Hatchens durchgeführt. Zum Slicen ist es erforderlich, die Lage des Bauteils auf der Bauplattform 20m zu berücksichtigen. Beim Hatchen wird der Werkzeugpfad WZ festgelegt, wobei hierbei die Verfahrensparameter PAR zu Grunde gelegt werden. Zum Bestimmen des Werkzeugpfades WZ, der auch die Belichtungsvektoren enthält, ist auch das verwendete Material MAT, aus dem das Pulver besteht, zu berücksichtigen.

Im Verfahrensschritt c wird zunächst ein standardisierter Werkzeugpfad WZ verwendet, der in Abhängigkeit vom einzusetzenden Material MAT ausgewählt wurde. Abhängig von den gewählten Verfahrensparametern (PAR), die den Energieeintrag in die Baustruktur 19m beeinflussen, kann anschließend in einem Verfahrensschritt d durch ein Programmmodul D eine makroskalige Simulation SIM macro durchgeführt werden. Hierbei wird die globale Temperaturentwicklung in vorher festgelegten Schichten simuliert und zwischen den Schichten für die gesamte hergestellte Baustruktur extrapoliert. Dadurch wird es möglich, die in der herzustellenden Lage 25 herrschende Temperatur Tg zu berechnen. Bei der makroskaligen Simulation kann als Grundlage entweder die platzierte Baustruktur 19m gemäß dem Verfahrensschritt b oder die bereits geslicete Baustruktur 19m gemäß dem Verfahrensschritt c ausgewählt werden.

In Abhängigkeit des gewählten Werkzeugpfades WZ, also auch des Verlaufes der Vektoren 30 im Werkzeugpfad WZ und den Lagen 25 des geslicten Modells 19m kann nun ein 3D-Punktdatensatz festgelegt werden. Dabei wird für jeden Vektor des Werkzeugpfades mindestens ein Abtastpunkt bestimmt.

Der Analyseschritt i im Programmmodul I berechnet den näherungsweisen Temperaturverlaufs in jedem Abtastpunkt. Dafür wird in jedem Abtastpunkt ein Massenintegral M berechnet. Nun kann aus der Regeldatenbank RULE (Modul F, zur Befüllung dieser Datenbank siehe Beschreibung Figur 2) in Abhängigkeit der Koordinaten des Abtastpunkts und des zugehörigen Belichtungsvektor sowie n vorherigen und nachherigen Belichtungsvektoren eine geeignete Temperaturfunktion oder zumindest deren Koeffizienten ausgewählt werden. Dabei wird in der Temperaturfunktion $T_g$ für $T_0$ eingesetzt.

Auf Grundlage der so simulierten, lokalen Temperatur in einer Menge von Punkten kann mit einem festgelegten Kriterium mögliche Überhitzung vorhergesagt werden. Wird so eine mögliche Überhitzung prognostiziert, wird in dem Verfahrensschritt g mit dem Korrekturmodul G mit ein korrigierter Werkzeugpfad WZ_IT festgelegt. Anschließend wird mit der zuvor beschriebenen Methode überprüft, ob der korrigierte Werkzeugpfad nicht mehr zu Überhitzung führt. Wenn dies der Fall ist, kann der korrigierte Werkzeugpfad als WZ_FIN zur Durchführung des Verfahrensschritts h an die Kontrolleinrichtung CRL (H) weitergegeben werden. Mit dieser lässt sich das Bauteil dann herstellen.

Andernfalls ist eine weitere Korrektur erforderlich. Hierbei handelt es sich um einen iterativen Vorgang von Temperaturberechnung, Kriteriumsabgleich, Korrekturmaßnahme und erneuter Temperaturberechnung.

Figur 2 zeigt das Vorgehen zum Befüllen der Datenbank RULE. Im Verfahrensschritt a wird die Geometrie eines repräsentativen Volumenelements (im Folgenden kurz RVE) festgelegt. Im Verfahrensschritt b wird für das RVE eine Oberfläche und auf dieser eine zu betrachtende Anzahl von Vektoren als Belichtungssequenz BS definiert. Diese Belichtungssequenz ist abhängig von dem verwendeten Material und beinhaltet die Verfahrensparameter PAR.

**[0084]** Es wird eine geeigneten Anzahl von Abtastpunkten AP auf den Belichtungsvektoren definiert. Jeder Abtastpunkt wird durch seine Koordinaten auf einem Belichtungsvektor und die den Vektor beinhaltende Belichtungssequenz sowie das Massenintegral M definiert. Hierzu wird ein Integrationsvolumen V gemäß Figur 3 berücksichtigt, welches im Schnitt eines der Vektoren 30 eingezeichnet ist. Dieses weist die Form eines Ellipsoids auf, deren Radius $\delta r$ in einer x-y-Ebene auf der Oberfläche RVE und einer Tiefe z in z-Richtung aufweist.

Es wird eine mesoskalige Simulation SIM meso durchgeführt. Hierbei wird eine Referenztemperatur $T_0$ berücksichtigt, die das Temperaturniveau beschreibt, auf dem sich das RVE bei der simulierten Herstellung der aktuellen Lage befindet. Aus der in diesem Schritt berechneten Temperaturentwicklung im gesamten RVE lässt sich ein Temperaturverlauf S der Temperatur T in Abhängigkeit von der Zeit t für jeden Abtastpunkt extrahieren.

Es findet danach ein Fit-Prozess statt, wobei die Koeffizienten der Summanden der Ansatzfunktion so bestimmt werden, dass die resultierende Temperaturfunktion als optimierte Näherung den FEM-simulierten Temperaturverlauf S beschreibt. Die auf diesem Wege aufgefundene Temperaturfunktion bzw. die Koeffizienten der genannten Summanden werden dann in der Datenbank RULE abgelegt.

Dabei werden so viele RVEs und Abtastpunkte betrachtet, dass jeder Datenpunkt eines Werkzeugpfades in einem möglichen Bauteil einen - im Sinne der definierenden Parameter - äquivalenten Abtastpunkt in der Datenbank RULE finden kann. Die hinterlegten Koeffizienten zeigen dann die extrahierten funktionalen Abhängigkeiten von diesen Parametern.

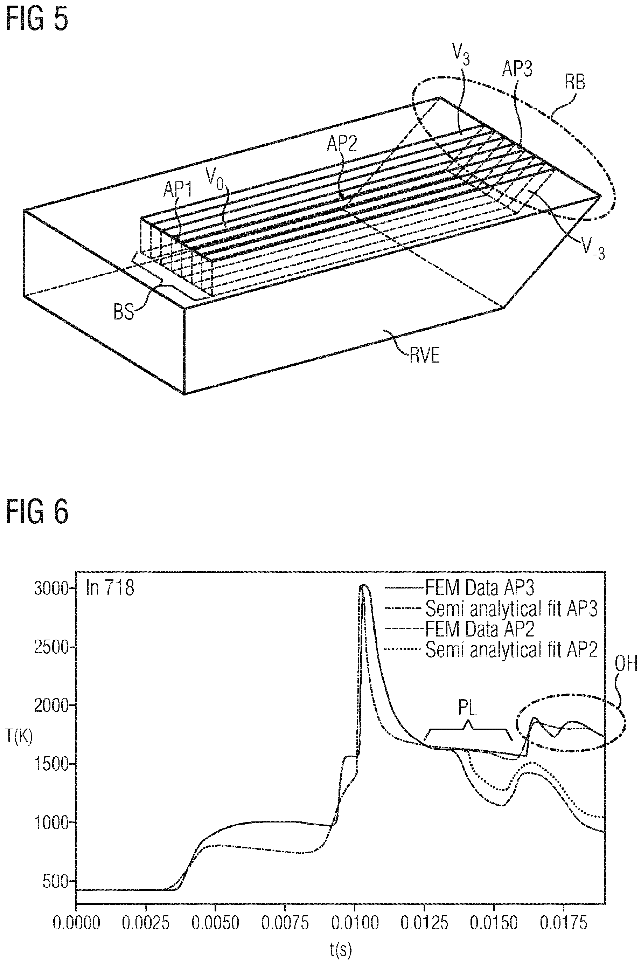

Figur 5 zeigt beispielhaft ein RVE, welches für die Legierung in Inconel 718 verwendet wurde. Dieses RVE weist an seinem einen Rand einen Überhang auf, welcher potenziell die Gefahr von Überhitzung (Overheating OH) birgt, wie Figur 6 entnommen werden kann. Weiterhin ist in Figur 5 zu erkennen, dass eine Belichtungssequenz BS aus 7 Vektoren bestehen kann. Der Vektor $V_0$ bezeichnet den gerade betrachteten Vektor, auf dem die Abtastpunkte AP1, AP2 und AP3 untersucht werden.

Weiterhin beinhaltet die Belichtungssequenz BS die vorhergehenden Vektoren $V_{-3}$ bis $V_{-1}$ und die nachfolgenden Vektoren $V_1$ bis $V_3$. Damit beinhaltet die Belichtungssequenz BS für das RVE insgesamt sieben Vektoren, wobei die Länge der Belichtungssequenz BS so gewählt ist, dass sie einen Temperaturverlauf im mittleren Vektor $V_0$ ausreichend repräsentiert. Dies bewirkt vorteilhaft einen geringen Rechenaufwand für die FEM-Simulation.

In Figur 6 ebenfalls zu erkennen ist, dass die Temperaturfunktion (semianalytical fit), die durch die Fit-Prozedur gefunden wurde, eine gute Näherung der Temperaturverhältnisse darstellt, die durch die FEM-Analyse (FEM Data) gefunden wurde. Weiterhin ist auch das Plateau PL zu erkennen, welches aufgrund der frei werdenden Schmelzwärme eine Abkühlung des Materials nach Belichtung durch den Laser verlangsamt.

In Figur 6 sind die vollständigen Kurven für den Abtastpunkt AP3 dargestellt. Zum Vergleich ist der Verlauf der Kurven nach 0,013 Sekunden auch für den Abtastpunkt AP 2 dargestellt. Ein Vergleich der Verläufe zeigt, dass eine Überhitzung OH, die in Figur 6 durch einen Wiederanstieg der Temperatur zu erkennen ist, nur im Randbereich RB gemäß Figur 5 auftritt, wo aufgrund des Überhangs eine geringere Wärmekapazität des RVE zum Abtransport der Wärme zur Verfügung steht.

Durch Kenntnis der Temperaturfunktion gemäß Figur 6 kann somit eine Korrektur der durch den Energiestrahl eingebrachten Energie am Rande einer zu erzeugenden Baustruktur erfolgen, wobei die Anwendung der in Figur 6 dargestellten Temperaturfunktion durch eine Analyse der Geometrie und des umliegenden Teils des Werkzeugpfads der herzustellenden Baustruktur erreicht wird.

## Patentansprüche

1. Verfahren zum Bestimmen einer Temperaturfunktion, die die lokale Temperaturentwicklung auf einem oder mehreren Abtastpunkten (AP) eines Belichtungsvektors ($V_0$) beschreibt, wobei

   • die Geometrie und Materialeigenschaften von mindesten einem repräsentativen Volumenelement (RVE) definiert werden,
   • eine Belichtungssequenz (BS) auf dem repräsentativen Volumenelement (RVE), bestehend aus den verwendeten Belichtungsvektoren, die in den Belichtungsvektoren verwendete Leistung, sowie die zeitliche Abfolge der Belichtung der einzelnen Belichtungsvektoren festgelegt wird,
   • eine globale Temperaturentwicklung in Form mindestens einer Referenztemperatur ($T_0$) vorgegeben wird,
   • die lokale Temperaturentwicklung in der Umgebung des Wärmeeintrags durch einen Energiestrahl (17) auf der Grundlage einer FEM-Simulation berechnet wird,
   • eine Ansatzfunktion bereitgestellt wird, die unter Berücksichtigung der Referenztemperatur ($T_0$) den Verlauf der lokalen Temperaturentwicklung als Summe von Basisfunktionen ($\Theta_m$) beschreibt, wobei die Basisfunktionen abklingende Impulsantworten auf einen durch den Energiestrahl (17) erzeugten Wärmeimpuls darstellt,
   • die Abtastpunkte (AP) auf der Belichtungssequenz (BS) für eine Fit-Prozedur festgelegt werden,
   • Koeffizienten bestimmt werden, mit denen die Ansatzfunktion an die durch die FEM-Methode ermittelte Temperaturentwicklung angepasst, insbesondere gefittet wird, wobei durch Einsetzen der Koeffizienten in die Ansatzfunktion eine Temperaturfunktion (T) erstellbar ist,
   • die Koeffizienten und/oder die Temperaturfunktion für die geltenden Prozessparameter in einer Datenbank (RULE) abgelegt werden.

2. Verfahren nach Anspruch 1,
   **dadurch gekennzeichnet,**
   **dass** für jeden Belichtungsvektor (V) zumindest ein Abtastpunkt, insbesondere jeweils am Anfang und am Ende des Belichtungsvektors ein Abtastpunktdefiniert wird.

3. Verfahren nach Anspruch 1 oder 2,
   **dadurch gekennzeichnet,**
   **dass** die Temperatur darstellt wird durch die Summe einer globalen Temperaturentwicklung ($T_0$) und einer lokalen Temperaturentwicklung $\sum_m \theta_{n+m} \left( t - t_0^{n+m} \right)$ wobei die Summanden Impulsfunktionen darstellen.

4. Verfahren nach einem der vorangehenden Ansprüche,
   **dadurch gekennzeichnet,**
   **dass** die Impulsfunktionen den Verlauf der lokalen Temperaturentwicklung durch Multiplikation einer Anstiegsfunktion (H) und einer abklingenden Exponentialfunktion (F) beschreibt.

5. Verfahren nach einem der Ansprüche 3 bis 4,
   **dadurch gekennzeichnet,**

**dass** die lokale Temperaturentwicklung durch mindestens drei Summanden beschrieben wird, wobei

• ein Summand die Temperaturentwicklung auf Grund des gerade belichteten Belichtungsvektors beschreibt,
• mindestens ein Summand die Temperaturentwicklung auf Grund mindestens eines der vorher belichteten Belichtungsvektoren beschreibt,
• mindestens ein Summand die Temperaturentwicklung auf Grund mindestens eines der nachher zu belichteten Belichtungsvektoren beschreibt.

6. Verfahren nach Anspruch 5,
**dadurch gekennzeichnet,**
**dass** die lokale Temperaturentwicklung durch nicht mehr als 101, bevorzugt nicht mehr als 11 Summanden beschrieben wird, wobei

• ein Summand die Temperaturentwicklung auf Grund des gerade belichteten Belichtungsvektors beschreibt,
• von den weiteren Summanden die Hälfte die Temperaturentwicklung auf Grund der vorher belichteten Belichtungsvektoren beschreibt,
• die restlichen Summanden die Temperaturentwicklung auf Grund der anschließend zu belichteten Belichtungsvektoren beschreibt.

7. Verfahren nach einem der Ansprüche 5 oder 6,
**dadurch gekennzeichnet,**
**dass** zusätzlich mindestens ein Summand berücksichtigt wird, der ein Plateau (PL) im Temperaturverlauf des Schmelzbades (32) auf Grund des Durchlaufens der Solidus-Liquidus-Temperaturbereiches beschreibt.

8. Verfahren nach Anspruch 7,
**dadurch gekennzeichnet,**
**dass** der Summand das Produkt einer exponentiell abfallenden Fermifunktion (K) und einer Anstiegsfunktion(H) enthält.

9. Verfahren zum Bestimmen von einem Prozessführung (PAR) beschreibenden Bauvorschriften enthaltenden Werkzeugpfad (WZ) zur additiven Herstellung einer Baustruktur (19) auf der Grundlage einer Simulation der Herstellung der Baustruktur, wobei für die Simulation

• der Werkzeugpfad (WZ) für die Baustruktur (19), zur Verfügung gestellt wird,
• eine globale Temperaturentwicklung in bereits hergestellten Lagen (25) der Baustruktur (19) unter Berücksichtigung einer Bauhistorie der Baustruktur und des Wärmeeintrags durch einen Energiestrahl (17) berechnet wird,
• die lokale Temperaturentwicklung in der Umgebung des Wärmeeintrags durch den Energiestrahl bestimmt wird,
• die Prozessführung unter Berücksichtigung der globalen Temperaturentwicklung und der lokalen Temperaturentwicklung bestimmt wird,

**dadurch gekennzeichnet,**
**dass**

• aus einer Datenbank (RULE) eine Temperatur-Funktion (T) und/oder die Koeffizienten einer Temperaturfunktion abgerufen wird, mit der die lokale Temperaturentwicklung berechnet wird,
• in Abhängigkeit der globalen Temperaturentwicklung und der lokalen Temperaturentwicklung Korrekturmaßnahmen der Prozessführung bestimmt werden,
• die Korrekturmaßnahmen der Prozessführung lokal einzelnen Vektoren (30) eines Werkzeugpfades (WZ) des Energiestrahls (17) zugeordnet werden.

10. Verfahren nach Anspruch 9,
**dadurch gekennzeichnet,**
**dass** die Schritte des Abrufens der Temperaturentwicklung und/oder der Koeffizienten, des Bestimmens der Korrekturmaßnahmen und des Zuordnens der Korrekturmaßnahmen zu überhitzten Vektoren wiederholt durchgeführt wird.

11. Verfahren nach Anspruch 9 oder 10,

**dadurch gekennzeichnet,**
**dass** die Datenbank (RULE) eine Vielzahl von Temperaturfunktionen und/oder Koeffizienten beinhaltet, die für unterschiedliche Punkte auf einem Vektor und/oder unterschiedliche Masseverteilungen und/oder Referenztemperaturen und/oder Vektorlängen im Werkzeugpfad im Bereich des Energieeintrags des Energiestrahls gelten, wobei zur Auswahl der geeigneten Temperaturfunktion und/oder Koeffizienten die Koordinaten des Punktes und/oder die Masseverteilung der Baustruktur (19) im Bereich des Energieeintrags des Energiestrahls und/oder die Referenztemperatur der Baustruktur (19) und/oder Vektorlänge im Werkzeugpfad berücksichtigt wird.

12. Verfahren nach Anspruch 11,
**dadurch gekennzeichnet,**
**dass** zur Ermittlung der Masseverteilung im Abtastpunkt im Bereich des Energieeintrags des Energiestrahls (17) ein Massenintegral berechnet wird,

   • wobei über ein definiertes Integrationsvolumen integriert wird,
   • wobei das Integrationsvolumen einen Teil der dem Energiestrahl (17) zugewandten Oberfläche der Baustruktur enthält,
   • wobei der Abtastpunkt des betrachteten Vektors (30) den Mittelpunkt des Integrationsvolumens bildet.

13. Verfahren nach Anspruch 12,
**dadurch gekennzeichnet,**
**dass** das Massenintegral die Gestalt eines Ellipsoids oder eines Halbellipsoids mit einer Halbachse $\delta r$ in der x-y-Ebene der herzustellenden Lage und $\delta z$ in z-Richtung hat.

14. Verfahren nach einem der Ansprüche 9 bis 13,
**dadurch gekennzeichnet,**
**dass** die Korrekturmaßnahmen eine Verringerung der Leistung des Energiestrahls und/oder eine Verlängerung der Pausenzeiten zwischen den Bestrahlungszeiten einzelner Vektoren (30) und/oder eine Vergrößerung der Verfahrgeschwindigkeit der Energiestrahls (17) und/oder eine Vergrößerung des Hatch-Abstandes zwischen den Vektoren (39) und/oder eine Veränderung der Vektorreihenfolge und/oder eine Veränderung der Vektorlänge und/oder eine Veränderung der Vektorausrichtung beinhalten.

15. Computerprogrammprodukt mit Programmbefehlen zur Durchführung des Verfahrens nach einem der Ansprüche 1 - 9.

16. Computerprogrammprodukt mit Programmbefehlen für eine Fertigungsanlage, die mittels der Programmbefehle konfiguriert wird, das Werkstück nach einem der Ansprüche 10 - 14 zu erzeugen.

17. Bereitstellungsvorrichtung für das Computerprogrammprodukt nach Anspruch 15 oder 16, wobei die Bereitstellungsvorrichtung das Computerprogrammprodukt speichert und/oder bereitstellt.

# FIG 1

FIG 2

FIG 3

# FIG 4

$T_g = T_0$

$T = T_0 \sum_n \theta_m$

COR

$\theta_0$

WZ critical?

$+$

$-$

CRL

WZ_FIN

FIG 5

FIG 6

Europäisches Patentamt
European Patent Office
Office européen des brevets

# EUROPÄISCHER RECHERCHENBERICHT

Nummer der Anmeldung

EP 18 21 4346

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 2 667 987 A1 (ARCAM AB [SE]) 4. Dezember 2013 (2013-12-04) * Zusammenfassung * * Absatz [0008] * * Absatz [0042] - Absatz [0044] * * Absatz [0049] - Absatz [0057] * * Absatz [0077] * * Absatz [0079] - Absatz [0081] * * Absatz [0089] * * Abbildungen 1-3,7-8 * ----- | 1-15 | INV. G06F17/50 B22F3/105 |
| A,D | WO 2017/174160 A1 (SIEMENS AG [DE]) 12. Oktober 2017 (2017-10-12) * Zusammenfassung * * Seite 8, Absatz 3 - Seite 9, Absatz 1 * * Seite 9, Absatz 4 - Seite 10, Absatz 1 * * Seite 14, Absatz 4 - Seite 15, Absatz 1 * * Seite 20, Absatz 3 - Seite 22, Absatz 1 * * Seite 24, Absatz 1 - Seite 25, Absatz 3 * ----- -/-- | 1-17 | |

**RECHERCHIERTE SACHGEBIETE (IPC)**

G06F
B22F
B33Y

Der vorliegende Recherchenbericht wurde für alle Patentansprüche erstellt

| Recherchenort | Abschlußdatum der Recherche | Prüfer |
|---|---|---|
| München | 8. Juli 2019 | Sohrt, Wolfgang |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
......................................................................
& : Mitglied der gleichen Patentfamilie, übereinstimmendes Dokument

EPO FORM 1503 03.82 (P04C03)

Seite 1 von 2

Europäisches
Patentamt

European
Patent Office

Office européen
des brevets

# EUROPÄISCHER RECHERCHENBERICHT

Nummer der Anmeldung

EP 18 21 4346

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | WESSELS H ET AL: "Investigation of heat source modeling for selective laser melting", COMPUTATIONAL MECHANICS, SPRINGER, BERLIN, DE, Bd. 63, Nr. 5, 27. September 2018 (2018-09-27), Seiten 949-970, XP036752484, ISSN: 0178-7675, DOI: 10.1007/S00466-018-1631-4 [gefunden am 2018-09-27] * Zusammenfassung * * Seite 955, Spalte 1, letzter Absatz - Spalte 2, Absatz 1 * * Seite 957, Spalte 2, Absatz 2 - Seite 958, Spalte 1, Absatz 1 * ----- | 1-17 | |
| A | LI C ET AL: "A multiscale modeling approach for fast prediction of part distortion in selective laser melting", JOURNAL OF MATERIALS PROCESSING TECHNOLOGY, ELSEVIER, NL, Bd. 229, 26. Oktober 2015 (2015-10-26), Seiten 703-712, XP029332947, ISSN: 0924-0136, DOI: 10.1016/J.JMATPROTEC.2015.10.022 * Zusammenfassung * * Seite 704, Spalte 2, Absatz 4 - Seite 705, Spalte 1, Absatz 2 * ----- | 1-17 | RECHERCHIERTE SACHGEBIETE (IPC) |
| A | EP 3 318 352 A1 (AMSIS GMBH [DE]) 9. Mai 2018 (2018-05-09) * Zusammenfassung * * Absatz [0006] * * Absatz [0020] * * Absatz [0076] - Absatz [0079] * ----- | 1-17 | |

Der vorliegende Recherchenbericht wurde für alle Patentansprüche erstellt

| Recherchenort | Abschlußdatum der Recherche | Prüfer |
|---|---|---|
| München | 8. Juli 2019 | Sohrt, Wolfgang |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

............................................................
& : Mitglied der gleichen Patentfamilie, übereinstimmendes Dokument

EPO FORM 1503 03.82 (P04C03)

Seite 2 von 2

**ANHANG ZUM EUROPÄISCHEN RECHERCHENBERICHT
ÜBER DIE EUROPÄISCHE PATENTANMELDUNG NR.**

EP 18 21 4346

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

08-07-2019

| Im Recherchenbericht angeführtes Patentdokument | Datum der Veröffentlichung | Mitglied(er) der Patentfamilie | Datum der Veröffentlichung |
|---|---|---|---|
| EP 2667987 A1 | 04-12-2013 | BR 112013009155 A2 | 26-07-2016 |
| | | CN 103338880 A | 02-10-2013 |
| | | EP 2667987 A1 | 04-12-2013 |
| | | JP 5712306 B2 | 07-05-2015 |
| | | JP 2014508668 A | 10-04-2014 |
| | | KR 20130139247 A | 20-12-2013 |
| | | RU 2013112124 A | 10-03-2015 |
| | | US 2013300035 A1 | 14-11-2013 |
| | | WO 2012102655 A1 | 02-08-2012 |
| WO 2017174160 A1 | 12-10-2017 | CA 3019409 A1 | 12-10-2017 |
| | | CN 109074410 A | 21-12-2018 |
| | | EP 3417386 A1 | 26-12-2018 |
| | | KR 20180126076 A | 26-11-2018 |
| | | WO 2017174160 A1 | 12-10-2017 |
| EP 3318352 A1 | 09-05-2018 | DE 102016120998 A1 | 03-05-2018 |
| | | EP 3318352 A1 | 09-05-2018 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

**In der Beschreibung aufgeführte Patentdokumente**

- WO 2017174160 A1

**In der Beschreibung aufgeführte Nicht-Patentliteratur**

- **H. CARSLAW ; J. JAEGER.** Conduction of heat in solids. Oxford Science Publications, 1959